# EUROPÄISCHE PATENTANMELDUNG

(11) **EP 2 735 468 A2**
(43) Veröffentlichungstag der Anmeldung: **28.05.2014**
(21) Anmeldenummer: 13005461.2
(22) Anmeldetag: 20.11.2013
(51) Int. Cl.: B60L 11/18

(54) **Verfahren zum Laden einer Traktionsbatterie**

(30) Priorität: 23.11.2012 DE 102012221473
(71) Anmelder: Bichler, Thomas, 83104 Tuntenhausen (DE); Koch, Georg, 85716 Unterschleißheim (DE); Heinbockel, Stefan, 81737 München (DE)
(72) Erfinder: Bichler, Thomas, 83104 Tuntenhausen (DE); Koch, Georg, 85716 Unterschleißheim (DE); Heinbockel, Stefan, 81737 München (DE)
(74) Vertreter: Flosdorff, Jürgen

(57) **Zusammenfassung**

Die Erfindung betrifft ein Verfahren zum Laden einer Fahrbatterie (3) eines elektrisch antreibbaren Fahrzeugs (5) mittels einer Ladeeinrichtung (1), die über eine mehrphasige Anschlussleitung (22) elektrisch mit einer Energieversorgungseinrichtung (25) verbunden ist und die über ein mehrphasiges Kontaktmittel (11) elektrisch mit dem Fahrzeug (5) verbunden ist. Bei dem Verfahren wird die Größe des durch die einzelnen Phasen des Kontaktmittels (11) zu dem Fahrzeug (5) fließenden Stroms ermittelt (13). Mittels eines Schaltens einer Schalteinrichtung (17) wird die Phase (L1') des Kontaktmittels (11), durch die der größte Strom fließt, elektrisch verbunden mit derjenigen Phase (L3) der Anschlussleitung (22), die elektrisch am geringsten belastet ist.

## Beschreibung

Die Erfindung betrifft ein Verfahren und eine Anordnung zum Laden einer Fahrbatterie eines elektrisch antreibbaren Fahrzeugs.

Elektrisch antreibbare Fahrzeuge weisen eine Fahrbatterie (Akkumulator) auf, welche die für den Fahrbetrieb benötigte elektrische Energie zur Verfügung stellt. Entladene Batterien müssen bei Bedarf mittels einer Ladeeinrichtung wieder aufgeladen werden. Die beim Aufladen auftretenden großen elektrischen Ströme belasten Energieversorgungseinrichtungen, z.B. Energieversorgungsnetze, erheblich.

Der Erfindung liegt die Aufgabe zugrunde, ein Verfahren und eine Anordnung anzugeben, mit denen sicher und kostengünstig auch Fahrbatterien großer elektrischer Kapazität aufgeladen werden können.

Diese Aufgabe wird erfindungsgemäß gelöst durch ein Verfahren und eine Anordnung nach den unabhängigen Patentansprüchen. Vorteilhafte Ausgestaltungen des Verfahrens und der Anordnung sind in den abhängigen Patentansprüchen angegeben.

Erfindungsgemäß angegeben wird ein Verfahren zum Laden einer Fahrbatterie eines elektrisch antreibbaren Fahrzeugs mittels einer Ladeeinrichtung, die über eine mehrphasige Anschlussleitung elektrisch mit einer Energieversorgungseinrichtung verbunden ist und die über ein mehrphasiges Kontaktmittel elektrisch mit dem Fahrzeug verbunden ist, wobei bei dem Verfahren die Größe des durch die einzelnen elektrischen Phasen des Konbaktmittels zu dem Fahrzeug fließenden Stroms ermittelt wird, und mittels eines Schaltens einer Schalteinrichtung die Phase des Kontaktmittels, durch die der größte Strom fließt, elektrisch verbunden wird mit derjenigen Phase der Anschlussleitung, die elektrisch am geringsten belastet ist. Hierbei ist besonders vorteilhaft, dass die elektrische Phase des Kontaktmittels, über die der größte Strom zu dem Fahrzeug fließt, elektrisch verbunden wird mit derjenigen elektrischen Phase der Anschlussleitung, die elektrisch am geringsten belastet ist. Damit wird ein Ausgleich (eine Angleichung) der elektrischen Belastung der Phasen der Anschlussleitung (und damit auch ein Ausgleich der elektrischen Belastung der Phasen der Energieversorgungseinrichtung, z. B. des Energieversorgungsnetzes) erreicht. Eine ausgeglichene, d.h. eine gleichmäßige elektrische Belastung der Phasen einer Energieversorgungseinrichtung dient der Stabilität und der Sicherheit der Energieversorgung, ermöglicht eine kostengünstige Auslastung der Phasen und ist deshalb vorteilhaft.

Das Verfahren kann auch so ausgestaltet sein, dass mittels eines Schaltens der Schalteinrichtung die Phase, des Kontaktmittels, durch die der zweitgrößte Strom fließt, elektrisch verbunden wird mit derjenigen Phase der Anschlussleitung, die elektrisch am zweitgeringsten belastet ist. Bei dieser Ausgestaltung des Verfahrens wird die Angleichung der elektrischen Belastungen der Phasen der Anschlüssleitung weiter verbessert.

Das Verfahren kann auch so ausgestaltet sein, dass mittels eines Schaltens der Schalteinrichtung die Phase des Kontaktmittels, durch die der kleinste Strom fließt, elektrisch verbunden wird mit derjenigen Phase der Anschlussleitung, die elektrisch am stärksten belastet ist. Damit wird vorteilhafterweise erreicht, dass die am stärksten belastete Phase der Anschlussleitung möglichst wenig zusätzlich belastet wird.

Das Verfahren kann auch so ablaufen, dass das Schalten der Schalteinrichtung unterbleibt, wenn durch alle Phasen des Kontaktmittels im Wesentlichen gleich große Ströme fließen (d.h. wenn das Laden der Fahrbatterie eine gleichmäßige Belastung für die Phasen der Anschlussleitung darstellt). Wenn durch alle Phasen des Kontaktmittels im Wesentlichen gleich große Ströme fließen, wenn also eine gleichmäßige Belastung der Phasen des Kontaktmittels vorliegt, dann schaltet vorteilhafterweise die Schalteinrichtung nicht (keine Umschaltung der Schalteinrichtung), sondern der vorliegende Schaltzustand wird beibehalten. Damit wird zum einen eine unnötige Abnutzung der Schalteinrichtung vermieden, zum anderen wird ein unnötiges Umschalten der Schalteinrichtung verhindert, welches unnötig Zeit verbrauchen würde.

Vorteilhafterweise sind die Anschlussleitung und/oder das Kontaktmittel jeweils zweiphasig oder dreiphasig ausgebildet.

Das Verfahren kann so ausgestaltet sein, dass vor dem Schalten der durch das Kontaktmittel zu dem Fahrzeug fließende Strom verringert wird. Damit wird eine Belastung der Schalteinrichtung beim Schalten (z.B. durch Entstehung eines Lichtbogens) vermindert.

Dabei kann das Verfahren so ausgestaltet sein, dass der durch das Kontaktmittel zu dem Fahrzeug fließende Strom verringert wird, indem dem Fahrzeug (von der Ladeeinrichtung) eine Verringerung des zulässigen Ladestroms signalisiert wird. Auf diese Signalisierung hin ruft das Fahrzeug einen verringerten Strom von der Ladeeinrichtung ab, so dass der durch das Kontaktmittel zu dem Fahrzeug fließende Strom verringert wird.

Das Verfahren kann auch so ablaufen, dass nach dem Schalten der durch das Kontaktmittel zu dem Fahrzeug fließende Strom vergrößert wird. Insbesondere kann nach dem Schalten der Strom auf den Lade-Nennstrom vergrößert werden.

Hierbei kann das Verfahren so ablaufen, dass der Strom vergrößert wird, indem dem Fahrzeug (von der Ladeeinrichtung) eine Vergrößerung des zulässigen Ladestroms signalisiert wird. Auf diese Signalisierung hin ruft das Fahrzeug einen größeren Strom von der Ladeeinrichtung ab, so dass der durch das Kontaktmittel zu dem Fahrzeug fließende Strom vergrößert wird.

Das Verfahren kann so ausgestaltet sein, dass die elektrische Belastung der Phasen der Anschlussleitung ermittelt wird mittels einer Messung des jeweils durch die Phasen fließenden Stroms.

Das Verfahren kann insbesondere so ablaufen, dass die elektrisch am geringsten belastete Phase der Anschlussleitung ermittelt wird, indem der die Phasen der Anschlussleitung jeweils durchfließende Strom gemessen wird und die Phase mit dem geringsten Strom ermittelt wird. Die Phase mit dem geringsten Strom ist die elektrisch am geringsten belastete Phase der Anschlussleitung.

Das Verfahren kann auch so ablaufen, dass die elektrisch am zweitgeringsten belastete Phase der Anschlussleitung ermittelt wird, indem der die Phasen der Anschlussleitung jeweils durchfließende Strom gemessen wird und die Phase mit dem zweitgeringsten Strom ermittelt wird. Die Phase mit dem zweitgeringsten Strom ist die am zweitgeringsten belastete Phase der Anschlussleitung. Das Verfahren kann auch so ablaufen, dass die elektrisch am stärksten belastete Phase der Anschlussleitung ermittelt wird, indem der die Phasen der Anschlussleitung jeweils durchfließende Strom gemessen wird und die Phase mit dem größten Strom ermittelt wird. Die Phase mit dem größten Strom ist die am stärksten belastete Phase der Anschlussleitung.

Das Verfahren kann so ausgestaltet sein, dass bei der Ermittlung der elektrischen Belastung der Phasen der Anschlussleitung die elektrische Maximalbelastbarkeit der einzelnen Phasen berücksichtigt wird (indem z.B. die Stärke der elektrischen Belastung als Verhältnis von dem die Phasen jeweils durchfließenden elektrischen Strom und der jeweiligen elektrischen Maximalbelastbarkeit ermittelt wird). Dadurch kann vorteilhafterweise auch berücksichtigt werden, wenn die einzelnen Phasen der Anschlussleitung eine unterschiedlich große elektrische Maximalbelastbarkeit aufweisen. Informationen über derartige Maximalbelastbarkeiten können z.B. von einem Betreiber der Energieversorgungseinrichtung (insbesondere von einem Netzbetreiber des Energieversorgungsnetzes) an die Steuereinheit übertragen (signalisiert) werden. Damit kann beispielsweise berücksichtigt werden, wenn eine einzelne Phase der Anschlussleitung durch eine fremde Netzlast permanent belastet ist oder wenn eine einzelne Phase temporär nur mit einem niedrigeren Strom belastet werden darf, z.B. wegen einer technischen Störung.

Das Verfahren kann auch so ausgestaltet sein, dass dem Fahrzeug eine Verringerung des zulässigen Ladestroms unter den Lade-Nennstrom signalisiert wird (und dadurch der durch das Kontaktmittel zu dem Fahrzeug fließende Strom verringert wird), wenn bei Laden des Fahrzeugs mit dem Lade-Nennstrom bei wenigstens einer Phase der Anschlussleitung deren elektrische Maximalbelastbarkeit überschritten werden würde. Hierbei wird vorteilhafterweise ebenfalls die elektrische Maximalbelastbarkeit der einzelnen Phasen der Anschlussleitung berücksichtigt.

Erfindungsgemäß angegeben wird weiterhin eine Anordnung zum Laden einer Fahrbatterie eines elektrisch antreibbaren Fahrzeugs mit mindestens einer Ladeeinrichtung, die über eine mehrphasige Anschlussleitung mit einer Energieversorgungseinrichtung verbindbar ist und die über ein mehrphasiges Kontaktmittel mit dem Fahrzeug verbindbar ist, wobei die Ladeeinrichtung eine Schalteinrichtung aufweist, die eingerichtet ist, eine (auswählbare) elektrische Verbindung zwischen den elektrischen Phasen des Kontaktmittels und den elektrischen Phasen der Anschlussleitung herzustellen. Dabei ist die Schalteinrichtung eingerichtet, verschiedene elektrische Verbindungen jeweils zwischen den einzelnen Phasen des Kontaktmittels und den einzelnen Phasen der Anschlussleitung herzustellen. Aus diesen verschiedenen elektrischen Verbindungen kann jeweils eine elektrische Verbindung ausgewählt werden. Die Schalteinrichtung ist also eingerichtet, eine auswählbare elektrische Verbindung zwischen den elektrischen Phasen des Kontaktmittels und den elektrischen Phasen der Anschlussleitung herzustellen. Insbesondere ist die Schalteinrichtung eingerichtet, eine aus mehreren möglichen elektrischen Verbindungen auswählbare elektrische Verbindung zwischen den elektrischen Phasen des Kontaktmittels und den elektrischen Phasen der Anschlussleitung herzustellen. Unter einer auswählbaren elektrischen Verbindung wird also eine elektrische Verbindung verstanden, die die verschiedenen Phasen des Kontaktmittels mit auswählbaren Phasen der Anschlussleitung elektrisch verbindet.

Diese Anordnung kann eine Steuereinheit aufweisen, die ein Steuersignal erzeugt, wobei das Steuersignal angibt, zwischen welchen Phasen des Kontaktmittels und welchen Phasen der Anschlussleitung die Schalteinrichtung die elektrische Verbindung herzustellen hat.

Die Anordnung kann weiterhin mindestens einen Sensor zum Ermitteln des durch die Phasen des Kontaktmittels zu dem Fahrzeug fließenden elektrischen Stroms aufweisen.

Die Anordnung kann ebenfalls mindestens einen Sensor zum Ermitteln der elektrischen Belastung der Phasen der Anschlussleitung aufweisen.

Die Anordnung kann so ausgestaltet sein, dass die Steuereinheit das Steuersignal derart erzeugt, dass die Schalteinrichtung eine elektrische Verbindung herstellt zwischen der Phase des Kontaktmittels, durch die beim Laden der größte Strom zu dem Fahrzeug fließt, und der Phase der Anschlussleitung, die elektrisch am geringsten belastet ist.

Die Anordnung kann auch so ausgestaltet sein, dass die Steuereinheit das Steuersignal derart erzeugt, dass die Schalteinrichtung eine elektrische Verbindung herstellt zwischen der Phase des Kontaktmittels, durch die beim Laden der zweitgrößte Strom zu dem Fahrzeug fließt, und der Phase der Anschlussleitung, die elektrisch am zweitgeringsten belastet ist.

Die Anordnung kann auch so ausgestaltet sein, dass die Steuereinheit das Steuersignal derart erzeugt, dass die Schalteinrichtung eine elektrische Verbindung herstellt zwischen der Phase des Kontaktmittels, durch die beim Laden der kleinste Strom zu dem Fahrzeug fließt, und der Phase der Anschlussleitung, die elektrisch am stärksten belastet ist.

Die Anordnung kann auch so ausgestaltet sein, dass die Anschlussleitung und/oder das Kontaktmittel jeweils zweiphasig oder dreiphasig ausgebildet sind.

Die Anordnung weist ebenfalls die Vorteile auf, die oben im Zusammenhang mit dem Verfahren angegeben sind.

Im Folgenden wird die Erfindung anhand eines Ausführungsbeispiels näher erläutert. Dazu ist in
- Figur 1: ein Ausführungsbeispiel einer Anordnung mit drei Ladeeinrichtungen, in
- Figur 2: ein Ablaufdiagramm eines beispielhaften Verfahrensablaufs und in
- Figur 3: ein Ausführungsbeispiel einer Schalteinrichtung

### dargestellt.

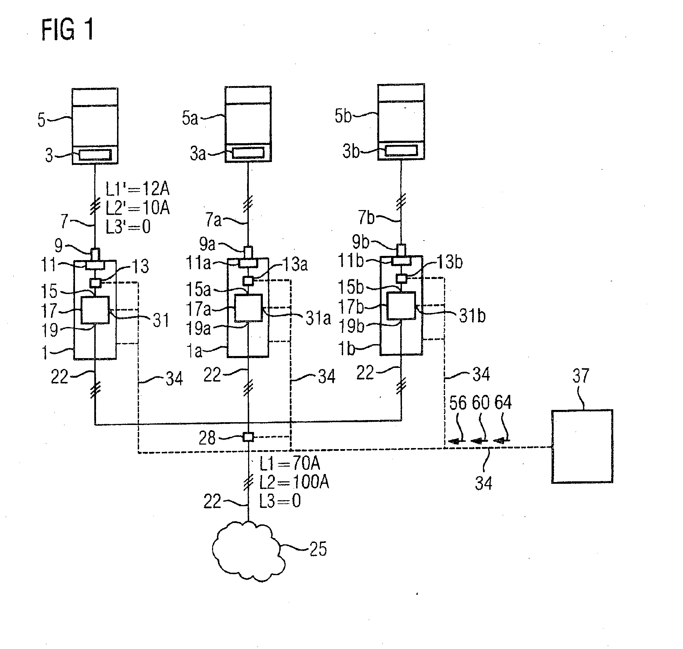

In Figur 1 ist eine Anordnung zum Laden von Fahrbatterien dreier elektrisch antreibbarer Fahrzeuge dargestellt. Diese Anordnung weist eine erste Ladeeinrichtung 1 auf, mittels der eine erste Fahrbatterie 3 eines ersten elektrisch antreibbaren Fahrzeugs 5 elektrisch aufgeladen werden kann. Dazu ist die erste Ladeeinrichtung 1 mittels eines ersten Ladekabels 7 mit dem ersten Fahrzeug 5 elektrisch verbunden. Das erste Ladekabel 7 weist einen ersten Ladestecker 9 auf, der mit einem ersten Kontaktmittel 11 der ersten Ladeeinrichtung 1 elektrisch verbunden ist. Im Ausführungsbeispiel ist das erste Kontaktmittel 11 als eine dreiphasige Steckdose 11 ausgestaltet. (In einem anderen Ausführungsbeispiel kann das Kontaktmittel auch zweiphasig ausgebildet sein.)

Das erste Ladekabel 7 ist im Ausführungsbeispiel dreiphasig ausgestaltet und weist eine erste Phase L1', eine zweite Phase L2', eine dritte Phase L3' sowie einen Neutralleiter N' auf. Das erste Ladekabel 7 kann in anderen Ausführungsbeispielen aber auch zweiphasig oder einphasig ausgestaltet sein. Das erste Kontaktmittel 11 (hier: die erste Steckdose 11) der ersten Ladeeinrichtung 1 ist dreiphasig ausgebildet. Ein zweiphasiges oder ein einphasiges Ladekabel würde entsprechend nur zwei Phasen oder eine Phase des Kontaktmittels 11 nutzen.

Das dreiphasige Kontaktmittel 11 ist über einen ersten Ladestromsensor 13 elektrisch mit einem ersten fahrzeugseitigen Anschluss 15 einer ersten Schalteinrichtung 17 elektrisch verbunden- Der Ladestromsensor 13 kann beispielsweise als ein dreiphasiges Strommessgerät ausgestaltet sein. Ein erster anschlussleitungsseitiger Anschluss 19 der ersten Schalteinrichtung 17 ist elektrisch mit einer Anschlussleitung 22 verbunden. Die elektrische Anschlussleitung 22 ist dreiphasig ausgebildet und weist eine erste Phase L1, eine zweite Phase L2, eine dritte Phase L3 sowie einen Neutralleiter N auf. Jede dieser Phasen L1, L2 und L3 der Anschlussleitung 22 kann nur mit einer bestimmten Maximalstromstärke belastet werden. (In einem anderen Ausführungsbeispiel kann die elektrische Anschlussleitung auch zweiphasig ausgebildet sein.)

Die elektrische Anschlussleitung 22 verbindet die erste Ladeeinrichtung 1 elektrisch mit einer Energieversorgungseinrichtung 25, wobei die Energieversorgungseinrichtung 25 beispielsweise ein Energieversorgungsnetz eines Energieversorgungsunternehmens ist. An der dreiphasigen Anschlussleitung 22 ist ein dreiphasiger Anschlussstromsensor 28 angeordnet, welcher den Strom in den drei Phasen der Anschlussleitung 22 messen kann. Dieser Anschlussstromsensor 28 kann beispielsweise als ein dreiphasiges Strommessgerät oder als ein dreiphasiges Smartmeter ausgestaltet sein.

Weiterhin weist die Schalteinrichtung 17 einen ersten Steueranschluss 31 auf, der über eine Kommunikationsverbindung 34 mit einer zentralen Steuereinheit 37 verbunden ist. Die Kommunikationsverbindung ist im Ausführungsbeispiel mittels einer gestrichelten Linie dargestellt und kann beispielsweise als eine Kommunikationsleitung oder eine drahtlose Kommunikationsverbindung ausgestaltet sein. Der Strompfad, durch den ein elektrischer Strom zum Aufladen der Fahrbatterie fließt, ist im Ausführungsbeispiel mittels durchgezogener Linien dargestellt.

Mittels der Kommunikationsverbindung 34 sind auch der Ladestromsensor 13 und der Anschlussstromsensor 28 mit der Steuereinheit 37 verbunden. Über diese Kommunikationsverbindung 34 kann die Steuereinheit 37 Messwerte von dem Ladestromsensor 13 und dem Anschlussstromsensor 28 auslesen sowie Steuersignale an die Schalteinrichtung 17 senden.

Weiterhin ist an die Anschlussleitung 22 eine gleichartig aufgebaute zweite Ladeeinrichtung 1a angeschlossen, mittels der eine zweite Fahrbatterie 3a eines zweiten elektrisch antreibbaren Fahrzeugs 5a aufgeladen werden kann. Ebenso ist an die Anschlussleitung 22 eine dritte Ladeeinrichtung 1b angeschlossen, mittels der eine dritte Fahrbatterie 3b eines dritten elektrisch antreibbaren Fahrzeugs 5b aufgeladen werden kann. Die zweite Ladeeinrichtung 1a und die dritte Ladeeinrichtung 1b sind gleichartig aufgebaut wie die erste Ladeeinrichtung 1; die Elemente dieser Ladeeinrichtungen sind mittels Bezugszeichen bezeichnet, die als Zusatz den Buchstaben "a" bzw. den Buchstaben "b" aufweisen. Dargestellt ist ein Ausführungsbeispiel mit drei Ladeeinrichtungen, im Allgemeinen ist aber die Anzahl der Ladeeinrichtungen nicht begrenzt.

Im Folgenden wird ein beispielhafter Verfahrensablauf zum Laden der ersten Fahrbatterie 3 des ersten Fahrzeugs 5 beschrieben. Ausgangssituation ist die Folgende: Mittels der dritten Ladeeinrichtung 1b wird bereits die Fahrbatterie 3b des Fahrzeugs 5b aufgeladen. Das Fahrzeug 5b nutzt zum Laden nur eine Phase des Ladekabels 7b (die Phase L2'), welche über die Schalteinrichtung 17b mit der Phase L2 der Anschlussleitung 22 elektrisch verbunden ist. Aufgrund des Ladens der dritten Fahrbatterie 3b fließt in der Anschlussleitung 22 in der Phase L2 ein Strom von 100 A. Mittels der zweiten Ladeeinrichtung 1a wird außerdem bereits die zweite Fahrbatterie 3a des zweiten Fahrzeugs 5a aufgeladen. Das Fahrzeug 5a nutzt zum Laden lediglich die Phase L1' des Ladekabels 7a; diese Phase L1' ist durch die zweite Schalteinrichtung 17a mit der ersten Phase L1 der Anschlussleitung 22 elektrisch verbunden. Aufgrund des Ladens der Fahrbatterie 3a fließt in der Anschlussleitung 22 in der Phase L1 ein Strom der Größe 70 A. Die durch die Phasen der Anschlussleitung 22 fließenden Ströme werden mittels des Anschlussstromsensors 28 gemessen und die Messwerte (L1 = 70 A, L2 = 100 A, L3 = 0 A) über die Kommunikationsverbindung 34 zu der Steuereinheit 37 übertragen. Die Phase mit dem geringsten Strom, also die Phase L3 mit einer Strombelastung von 0 A, ist die elektrisch am geringsten belastete Phase der Anschlussleitung 22. Die Phase mit dem zweitgeringsten Strom, also die Phase L1 mit einer Strombelastung von 70 A, ist die am zweitgeringsten belastete Phase der Anschlussleitung. Die Phase mit dem höchsten Strom, also im Ausführungsbeispiel die Phase L2 mit einer Strombelastung von 100 A, ist die am höchsten belastete Phase der Anschlussleitung.

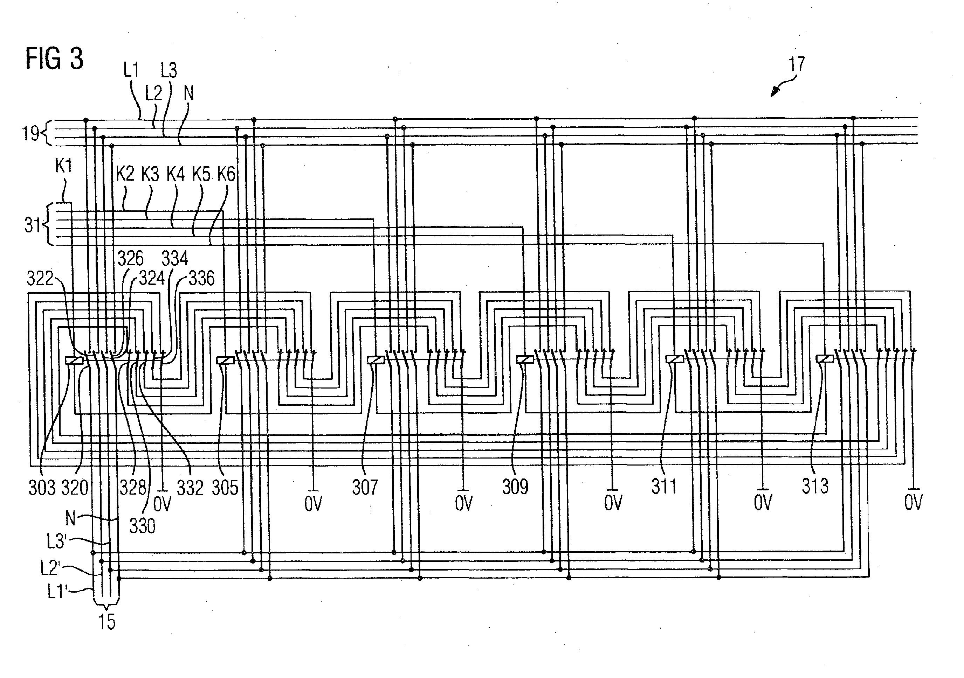

Jetzt soll zusätzlich die erste Fahrbatterie 3 mittels der ersten Ladeeinrichtung 1 aufgeladen werden. Das Fahrzeug 5 ist zu diesem Zweck bereits mit dem Ladekabel 7 mit der Ladeeinrichtung 1 elektrisch verbunden. Die Schalteinrichtung 17 weist einen Ausgangszustand auf, bei dem die Phase L1' mit der Phase L1 elektrisch verbunden ist, die Phase L2' mit der Phase L2 elektrisch verbunden ist und die Phase L3' mit der Phase L3 elektrisch verbunden ist. Dieser Ausgangszustand liegt vor, wenn lediglich das erste Schütz 303 mittels eines Steuersignals (K1=1, K2=0, K3=0, K4=0, K5=0, K6=0) eingeschaltet ist, vgl. Figur 3. Der Ladevorgang beginnt mit einem Strom, der gegenüber dem für das Fahrzeug 3 verwendeten Lade-Nennstrom reduziert ist. Beispielsweise beträgt dieser reduzierte Strom (reduzierte Ladestrom) 10 % des Lade-Nennstroms. Der Strompfad, durch den der elektrische Strom zum Aufladen der ersten Fahrbatterie 3 fließt, verläuft von der Energieversorgungseinrichtung 25 über die Anschlussleitung 22, die erste Schalteinrichtung 17 und das erste Ladekabel 7 zu der ersten Fahrbatterie 3. Das Fahrzeug 5 nutzt zum Laden ausschließlich die erste Phase L1' und die zweite Phase L2' des Ladekabels 7. Dies ist dem Betreiber der Ladeeinrichtung 1 jedoch zu Beginn des Ladeverfahrens nicht bekannt.

Die Ladeeinrichtung 1 misst mittels des Ladestromsensors 13 den durch die drei Phasen des Kontaktmittels 11 fließenden elektrischen Strom. Im Ausführungsbeispiel werden folgende Stromwerte gemessen: Durch die Phase L1' fließt ein Strom in Höhe von 12 A, durch die Phase L2' fließt ein Strom in Höhe von 10 A. Durch die Phase L3' fließt kein Strom. Diese Messwerte (L1' = 12A, L2' = 10 A, L3' = 0 A) werden von dem Ladestromsensor 13 über die Kommunikationsverbindung 34 zu der Steuereinheit 37 übertragen.

Die Steuereinheit 37 erkennt, dass über die Phase L1' des Kontaktmittels 11 der größte Strom fließt und über die Phase L2' des Kontaktmittels der zweitgrößte Strom fließt. Weiterhin ist der Steuereinheit aufgrund der Messung des Anschlussstromsensors 28 bekannt, dass die Phase L3 der Anschlussleitung 23 bisher am geringsten belastet ist (nämlich unbelastet, L3 = 0 A) und dass die Phase L1 der Anschlussleitung 22 elektrisch am zweitgeringsten belastet ist (L1 = 70 A). Die Phase L2 der Anschlussleitung 22 dagegen ist die elektrisch am höchsten belastete Phase; sie wird bereits vor Beginn des Ladevorgangs für die Fahrbatterie 3 mit 100 A belastet (L2 = 100 A).

Die Steuereinheit sendet nun ein Steuersignal 56 an die erste Ladeeinrichtung 1. Mit diesem Steuersignal 56 wird die erste Ladeeinrichtung 1 angewiesen, dem Fahrzeug 5 eine Verringerung des zulässigen Ladestroms auf Null zu signalisieren. Die erste Ladeeinrichtung 1 signalisiert über das Ladekabel 7 eine derartige Verringerung des zulässigen Ladestroms an das Fahrzeug 5, woraufhin das Fahrzeug 5 den von der Ladeeinrichtung 1 abgeforderten Strom auf Null reduziert. Diese Signalisierung an das Fahrzeug kann beispielsweise mittels eines Pilotsignals gemäß der Norm IEC61851 erfolgen.

Daraufhin sendet die Steuereinheit 37 ein Steuersignal 60 an die Ladeeinrichtung 1. Mit diesem Steuersignal 60 wird die Schalteinrichtung 17 angewiesen, die erste Phase L1' des Kontaktmittels 11 mit der dritten Phase L3 der Anschlussleitung 22 elektrisch zu verbinden. Weiterhin wird mit dem Steuersignal 60 die Schalteinrichtung 17 angewiesen, die zweite Phase L2' des Kontaktmittels 11 mit der ersten Phase L1 der Anschlussleitung 22 elektrisch zu verbinden. Zusätzlich wird mit dem Steuersignal 60 die Schalteinrichtung 17 angewiesen, die dritte Phase L3' des Kontaktmittels 11 mit der zweiten Phase L2 der Anschlussleitung 22 elektrisch zu verbinden. Dies geschieht, indem ein Steuersignal 60 mit den Werten K1 = 0, K2 = 0, K3 = 1, K4 = 0, K5 = 0, K6 = 0 an die Schalteinrichtung gesendet wird. vgl. Figur 3. Mit anderen Worten gesagt, gibt das Steuersignal 60 an, zwischen welchen Phasen des Kontaktmittels und welchen Phasen der Anschlussleitung die Schalteinrichtung die elektrische Verbindung herzustellen hat.

Durch dieses Steuersignal wird bei der Schalteinrichtung das dritte Schütz 307 eingeschaltet und dadurch die nachfolgend genannten elektrischen Verbindungen hergestellt:
L1'-L3
L2'-L1
L3'-L2.

Es wird also mittels eines Schaltens der Schalteinrichtung 17 die Phase L1' des Kontaktmittels, durch die der größte Strom fließt, elektrisch verbunden mit der Phase L3 der Anschlussleitung, die elektrisch am geringsten belastet ist. Weiterhin wird durch das Schalten der Schalteinrichtung die Phase L2' des Kontaktmittels, durch die der zweitgrößte Strom fließt, elektrisch verbunden mit der Phase L1 der Anschlussleitung, die elektrisch am zweitgeringsten belastet ist. Schließlich wird auch durch das Schalten der Schalteinrichtung die Phase L3' des Kontaktmittels, durch die der kleinste Strom fließt, elektrisch verbunden mit der Phase L2 der Anschlussleitung, die elektrisch am höchsten belastet ist.

Nach dem Schalten der Schalteinrichtung 17 wird der durch das Kontaktmittel 11 zu dem Fahrzeug 5 fließende Strom vergrößert. Dazu sendet die Steuereinheit 37 ein Steuersignal 64 an die erste Ladeeinrichtung 1. Mit diesem Steuersignal 64 wird die erste Ladeeinrichtung angewiesen, dem Fahrzeug 5 zu signalisieren, dass der zulässige Ladestrom einen größeren Wert aufweist, d. h. es wird eine Vergrößerung des zulässigen Ladestroms an das Fahrzeug 5 signalisiert. Daraufhin fordert das Fahrzeug 5 einen entsprechend größeren Ladestrom (mit dem beim Laden üblichen Lade-Nennwert des Fahrzeugs 5) von der Ladeeinrichtung 1 ab; mit diesem Ladestrom wird jetzt der Ladevorgang fortgesetzt und die Fahrbatterie 3 aufgeladen. Im Laufe des weiteren Ladevorgangs kann optional die Belastung der Phasen der Anschlussleitung erneut ermittelt werden und mittels eines erneuten Schaltens der Schalteinrichtung 17 dafür gesorgt werden, dass die Phasen der Anschlussleitung 22 möglichst gleichmäßig belastet werden. Zusätzlich kann die Steuereinheit 37 wahlweise auch die zu dem Fahrzeug 5a und/oder zu dem Fahrzeug 5b fließenden Ströme messen bzw. überwachen und bei einer ungleichmäßigen Belastung (Schieflast) ein Schalten der zugehörigen Schalteinrichtungen veranlassen, um die Gesamtbelastung der Phasen der Anschlussleitung zu vergleichmäßigen.

Wenn in einem anderen Ausführungsbeispiel die Messung der durch die Phasen L1', L2' und L3' fließenden Ströme ergeben hätte, dass durch sämtliche Phasen L1', L2' und L3' des Kontaktmittels im Wesentlichen gleichgroße Ströme fließen (weil das Fahrzeug alle drei Phasen zum Laden der Fahrbatterie 3 verwendet und alle drei Phasen gleichmäßig belastet, so dass z. B. die durch die drei Phasen fließenden Ströme um nicht mehr als 10 % voneinander abweichen), dann unterbleibt das Schalten der Schalteinrichtung 17. In diesem Fall erkennt die Steuereinheit 37 anhand der Messwerte des gemessenen Stromflusses, dass das Fahrzeug alle drei Phasen des Kontaktmittels zum Laden verwendet und dass die dadurch entstehende elektrische Belastung gleichmäßig auf die drei Phasen verteilt ist. Daraufhin sendet die Steuereinheit 37 nicht das das Schalten der Schalteinrichtung 17 bewirkende Steuersignal 60 an die Ladeeinrichtung 1. In diesem Fall würde nämlich ein Schalten nicht wesentlich beitragen zu einer Angleichung der Belastung der einzelnen Phasen der Anschlussleitung. Daher unterbleibt das Schalten, wodurch eine unnötige Abnutzung der Schaltelemente der Schalteinrichtung vermieden wird. Der Ladevorgang wird mit dem Lade-Nennwert des Ladestroms (Lade-Nennstrom) fortgesetzt.

Bei dem beschriebenen Verfahren und der beschriebenen Anordnung ist vorteilhaft, dass eine Ungleichbelastung der Phasen L1, L2 und L3 der Anschlussleitung 22 der Energieversorgung (und damit auch eine Ungleichbelastung der Phasen der Energieversorgungseinrichtung 25) ausgeglichen werden kann. Wenn die Phasen der Anschlussleitung ungleichmäßig belastet sind und daher die Gefahr einer zu starken Belastung einer einzelnen Phase besteht, sorgt die Steuereinheit 37 dafür, dass mittels der Schalteinrichtung die Phasen neu zu ladender Elektrofahrzeuge, die einen hohen Stromfluss aufweisen, mit den bisher weniger belasteten Phasen der Anschlussleitung der Energieversorgungseinrichtung verbunden werden. Hierdurch wird die Gesamtlast gleichmäßig auf die einzelnen Phasen der Anschlussleitung verteilt und es kann eine große Anzahl von Elektrofahrzeugen gleichzeitig und in kurzer Zeit geladen werden. Insbesondere wird vermieden, dass ein neuer Ladevorgang nicht akzeptiert / abgewiesen wird, weil eine Phase der Anschlussleitung bzw. der Energieversorgungseinrichtung bereits ausgelastet ist. Ebenso wird vermieden, dass die Stromaufnahme bereits laufender Ladevorgänge, die die ausgelastete Phase nutzen, reduziert wird, um einen weiteren Ladevorgang starten zu können. Eine solche Reduzierung der Stromaufnahme der Ladevorgänge würde nämlich die Ladedauer der bereits im Aufladeprozess befindlichen Elektrofahrzeuge vergrößern, was unerwünscht ist.

Der Vorteil des beschriebenen Verfahrens und der beschriebenen Anordnung wird besonders deutlich, wenn man in Betracht zieht, dass manche Elektrofahrzeuge nicht sämtliche drei Phasen des Kontaktmittels 11 zum Laden nutzen, sondern beispielsweise nur eine Phase des Kontaktmittels oder zwei Phasen des Kontaktmittels. Dies geschieht gelegentlich z. B. aus Kostengründen oder aufgrund einer gewünschten Kompatibilität mit ein- oder zweiphasigen Stromnetzen. Daher werden in solchen Fällen die einzelnen Phasen der Anschlussleitung unterschiedlich stark belastet. Dieses Ungleichgewicht der Belastung wird umso stärker, je mehr Fahrzeuge nur ein- oder zweiphasig laden.

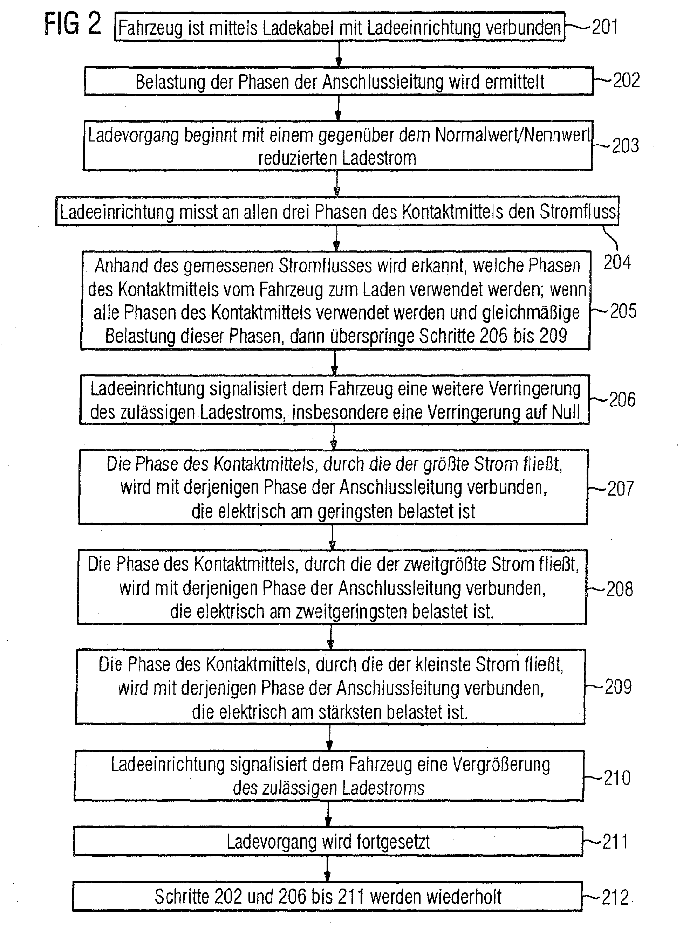

In Figur 2 ist das beschriebene Verfahren zum Laden einer Fahrbatterie eines elektrisch antreibbaren Fahrzeugs noch einmal in Form eines Ablaufdiagramms dargestellt. Zum Start des Verfahrens ist das Fahrzeug bereits mittels eines Ladekabels mit der Ladeeinrichtung verbunden, die Schalteinrichtung weist den oben beschriebenen Ausgangszustand auf (Schritt 201). Danach wird die Belastung der Phasen der Anschlussleitung 22 mittels des Anschlussstromsensors 28 ermittelt (Schritt 202). Daraufhin beginnt der Ladevorgang mit einem reduzierten Ladestrom, d. h. mit einem Ladestrom, der geringer ist als der Normalwert des Ladestroms beim Laden (d.h. geringer als der Lade-Nennstrom) (Schritt 203). Daraufhin misst die Ladeeinrichtung an allen drei Phasen L1', L2' und L3' des Kontaktmittels 11 den Stromfluss (Schritt 204). Anhand des gemessenen Stromflusses erkennt die Steuereinheit, welche Phasen des Kontaktmittels vom Fahrzeug zum Laden verwendet werden. Wenn vom Fahrzeug alle drei Phasen des Kontaktmittels verwendet werden und eine gleichmäßige elektrische Belastung dieser drei Phasen vorliegt, dann werden die Schritte 206 bis 209 übersprungen (Schritt 205). Daraufhin signalisiert die Ladeeinrichtung (auf ein entsprechendes Steuersignal der Steuereinheit hin) dem Fahrzeug eine weitere Verringerung des zulässigen Ladestroms, insbesondere eine Verringerung auf Null (Schritt 206).

Durch ein Schalten der Schalteinrichtung 17 wird diejenige Phase des Kontaktmittels, durch die der größte Strom fließt, elektrisch verbunden mit derjenigen Phase der Anschlussleitung, die elektrisch am geringsten belastet ist (Schritt 207). Durch das Schalten der Schalteinrichtung 17 wird auch die Phase des Kontaktmittels, durch die der zweitgrößte Strom fließt, elektrisch verbunden mit derjenigen Phase der Anschlussleitung, die elektrisch am zweitgeringsten belastet ist (Schritt 208). Durch das Schalten der Schalteinrichtung 17 wird auch die Phase des Kontaktmittels, durch die.der kleinste Strom fließt, elektrisch verbunden mit derjenigen Phase der Anschlussleitung, die elektrisch am stärksten belastet ist (Schritt 209). Die Schritte 208 und/oder 209 sind optional und können auch weggelassen werden. Auf ein entsprechendes Steuersignal der Steuereinheit hin signalisiert daraufhin die Ladeeinrichtung dem Fahrzeug eine Vergrößerung des zulässigen Ladestroms auf den Normalwert des Ladestroms (Schritt 210). Daraufhin wird der Ladevorgang fortgesetzt (Schritt 211). Während des weiteren Verlaufs des Ladevorgangs können die Schritte 202 und 206 bis 211 wiederholt werden (Schritt 212). Der Schritt 212 ist optional und kann auch weggelassen werden. Das heißt, während des weiteren Verlaufs des Ladevorgangs kann erneut die Belastung der Phasen der Anschlussleitung ermittelt werden und ggf. durch ein Schalten der Schalteinrichtung (wie oben erläutert) eine Ungleichbelastung der einzelnen Phasen der Anschlussleitung verringert werden.

Bei dem beschriebenen Verfahren kann bei der Ermittlung der elektrischen Belastung der Phasen der Anschlussleitung auch die elektrische Maximalbelastbarkeit der einzelnen Phasen berücksichtigt werden (indem z.B. das Verhältnis von dem die Phase jeweils durchfließenden elektrischen Strom und der elektrischen Maximalbelastbarkeit der jeweiligen Phase ermittelt wird und dieses Verhältnis die Stärke der elektrischen Belastung angibt). Dadurch kann berücksichtigt werden, wenn die einzelnen Phasen der Anschlussleitung eine unterschiedlich große elektrische Maximalbelastbarkeit aufweisen. Informationen über derartige Maximalbelastbarkeiten können z.B. von einem Netzbetreiber des Energieversorgungsnetzes an die Steuereinheit übertragen (signalisiert) werden. Damit kann beispielsweise berücksichtigt werden, wenn eine einzelne Phase der Anschlussleitung durch eine fremde Netzlast permanent belastet ist oder wenn eine einzelne Phase temporär nur mit einem niedrigeren Strom belastet werden darf, z.B. wegen einer technischen Störung. Im Extremfall kann so auch eine elektrische Maximalbelastbarkeit von Null für eine Phase berücksichtigt werden, wenn beispielsweise durch das Auslösen einer Sicherung eine Phase vollständig ausgefallen ist.

Das Verfahren kann auch so ablaufen, dass dem Fahrzeug eine Verringerung des zulässigen Ladestroms unter den Lade-Nennstrom signalisiert wird (und dadurch der durch das Kontaktmittel zu dem Fahrzeug fließende Strom verringert wird), wenn bei Laden des Fahrzeugs mit dem Lade-Nennstrom bei wenigstens einer Phase der Anschlussleitung deren elektrische Maximalbelastbarkeit überschritten werden würde.

In Figur 3 ist ein Ausführungsbeispiel der Schalteinrichtung 17 dargestellt. Dabei ist im linken oberen Bereich der Figur 3 der anschlussleitungsseitige Anschluss 19 (energieversorgungsseitige Anschluss 19) und darunter der Steueranschluss 31 dargestellt. Im unteren Teil der Figur 3 ist der fahrzeugseitige Anschluss 15 dargestellt. Die Schalteinrichtung 17 weist ein erstes Schütz 303, ein zweites Schütz 305, ein drittes Schütz 307, ein viertes Schütz 309, ein fünftes Schütz 311 sowie ein sechstes Schütz 313 auf. Das erste Schütz 303 weist vier Hauptkontakte 320, 322, 324 und 326 sowie fünf Hilfskontakte 328, 330, 332, 334 und 336 auf. Das zweite Schütz 305, das dritte Schütz 307, das vierte Schütz 309, das fünfte Schütz 311 und das sechste Schütz 313 sind gleichartig ausgestaltet, insbesondere sind auch bei diesen Schützen jeweils fünf Hilfskontakte zur gegenseitigen Verriegelung der Schütze vorgesehen.

Wenn ein Steuersignal die Werte K1=1, K2=0, K3=0, K4=0, K5=0, K6=0 aufweist, dann wird nur das erste Schütz 303 eingeschaltet, wogegen das zweite Schütz 305, das dritte Schütz 307, das vierte Schütz 309, das fünfte Schütz 311 und das sechste Schütz 313 ausgeschaltet bleiben. In diesem Fall werden mittels der Hauptkontakte 320, 322 und 324 die folgenden elektrischen Verbindungen zwischen den Phasen L1, L2 und L3 der Anschlussleitung 22 und den Phasen L1', L2' und L3' des Kontaktmittels 11 hergestellt:
L1 - L1'
L2 - L2'
L3 - L3'.

Zusätzlich wird über den Hauptkontakt 326 der Neutralleiter N der Anschlussleitung 22 mit dem Neutralleiter N' des Kontaktmittels 11 elektrisch verbunden. Mittels der Hilfskontakte 328, 330, 332, 334 und 336 wird sichergestellt, dass bei eingeschaltetem ersten Schütz 303 die anderen Schütze 305, 307, 309, 311 und 313 nicht eingeschaltet werden können (weil bei eingeschaltetem ersten Schütz 303 die Leitung mit dem Signal K2 zu dem zweiten Schütz 305, die Leitung mit dem Signal K3 zu dem dritten Schütz 307, die Leitung mit dem Signal K4 zu dem vierten Schütz 309, die Leitung mit dem Signal K5 zu dem fünften Schütz 311 und die Leitung mit dem Signal K6 zu dem sechsten Schütz 313unterbrochen sind). Damit wird verhindert, dass versehentlich mehrere Phasen der Anschlussleitung 22 kurzgeschlossen werden. Vorteilhafterweise werden für diese Hilfskontakte 328, 330, 332, 334 und 336vorauseilende Öffner verwendet, um ein zeitliches Überschneiden des Schließens der Hauptkontakte verschiedener Schütze beim Umschalten zu vermeiden. Mit anderen Worten sind über die Hilfskontakte die sechs Schütze gegeneinander verriegelt. Eine solche gegenseitige Verriegelung kann auch über mechanische Maßnahmen (gegenseitige Sperrung der Schütze auf mechanischem Wege) erreicht werden. Ebenso kann diese Verriegelung auch auf elektronischem Weg erfolgen.

Wenn das an dem Steueranschluss 31 anliegende Steuersignal die Werte K1=0, K2=1, K3=0, K4=0, K5=0, K6=0 aufweist, dann wird nur das zweite Schütz 305 eingeschaltet; die anderen Schütze 303, 307, 309, 311 und 313 bleiben ausgeschaltet. In diesem Fall wird folgende elektrische Verbindung der Phasen hergestellt:
L1 - L3'
L2 - L1'
L3 - L2'.

Bei Vorliegen eines Steuersignals mit den Werten K1=0, K2=0, K3=1, K4=0, K5=0, K6=0 wird nur das dritte Schütz 307 eingeschaltet, wohingegen die anderen Schütze 303, 305, 309, 311 und 313 ausgeschaltet bleiben. In diesem Fall werden die Phasen folgendermaßen zusammengeschaltet:
L1 - L2'
L2 - L3'
L3 - L1'.

Mittels eines Steuersignals K1=0, K2=0, K3=0, K4=1, K5=0, K6=0 kann ausschließlich das vierte Schütz 309 eingeschaltet werden; mittels eines Steuersignals K1=0, K2=0, K3=0, K4=0, K5=1, K6=0 kann ausschließlich das fünfte Schütz 311 eingeschaltet werden und mittels eines Steuersignals K1=0, K2=0, K3=0, K4=0, K5=0, K6=1 kann ausschließlich das sechste Schütz 313 eingeschaltet werden.

Die Schalteinrichtung (Umschaltvorrichtung) 17 realisiert eine elektronisch ansteuerbare Umschaltung der elektrischen Verbindung zwischen den Phasen L1, L2 und L3 der Energieversorgung und den Phasen L1', L2' und L3' des Elektrofahrzeugs. Mittels dieser Umschaltung kann jede Phase der Energieversorgung bzw. der Anschlussleitung (L1, L2, L3) mit jeder beliebigen Phase des Elektrofahrzeugs bzw. mit jeder beliebigen Phase des Kontaktmittels zum Anschluss des Elektrofahrzeugs (L1', L2', L3') verbunden werden. Die Umschaltung wird von einer Steuereinheit (z. B. von einem Steuerrechner) über ein Steuersignal (z.B. mit den Werten K1, K2, K3, K4, K5, K6) veranlasst. Eine derartige Schalteinrichtung wird an jedem Anschlusspunkt für ein Elektrofahrzeug (d. h. beispielsweise an jeder Ladeeinrichtung für ein Elektrofahrzeug) benötigt. Im Ausführungsbeispiel wurde eine Schalteinrichtung mit Schützen beschrieben. (Ein Schütz, auch Schaltschütz genannt, ist ein mechanischer Schalter mit zwei Schaltstellungen für große elektrische Leistungen. Ein Schütz ähnelt einem Relais.) In anderen Ausführungsbeispielen kann das Schalten/Umschalten auch mittels elektronischer Schalter, beispielsweise mittels IGBTs, erfolgen. Auf das Schalten des Neutralleiters (wie es im Ausführungsbeispiel stattfindet) kann auch verzichtet werden; der Neutralleiter N kann auch fest verdrahtet sein. Mittels der Schalteinrichtung kann die Last neu zu ladender Fahrzeuge so auf die einzelnen Phasen der Anschlussleitung verteilt werden, dass die Gesamtlast gleichmäßig verteilt ist. Dadurch kann eine große Anzahl von Elektrofahrzeugen gleichzeitig und in kurzer Zeit geladen werden.

Der beschriebene Lastausgleich kann auch bei einem bereits laufenden Ladevorgang erfolgen. Auch hierbei wird wieder - wie oben beschrieben - die Stromaufnahme des betreffenden Fahrzeugs heruntergeregelt und dann die zum Laden verwendeten Phasen geändert. Eine solche Änderung der Phasen während des Ladevorgangs kann insbesondere dann sinnvoll sein, wenn sich die Stromaufnahme der angeschlossenen Fahrzeuge geändert hat oder ein anderer Ladevorgang beendet wurde. Weiterhin kann auch der Fall auftreten, dass ein Fahrzeug während des Ladevorgangs die Belastung der einzelnen Phasen verändert. In diesen Fällen kann es sinnvoll sein, die einzelnen Phasenströme am Kontaktmittel kontinuierlich zu überwachen und ggf. die Zuordnung der Phasen des Kontaktmittels zu den Phasen der Anschlussleitung zu ändern.

Bei dem beschriebenen Verfahren und der beschriebenen Anordnung können die zum Laden verwendeten Phasen der Anschlussleitung bzw. der Energieversorgungseinrichtung innerhalb der Ladeeinrichtung während des Ladens dynamisch geändert werden. Damit kann eine Ungleichbelastung der Phasen der Anschlussleitung vermieden werden, welche daher resultiert, dass manche Autohersteller in den Ladegeräten ihrer Fahrzeuge nicht alle drei Phasen zum Laden verwenden. Aufgrund des Neuzuordnens der Phasen der Fahrzeuge zu den Phasen der Anschlussleitung kann die Maximalanzahl gleichzeitig zu ladender Fahrzeuge erhöht werden. Den Betreibern von Ladeeinrichtungen wird ermöglicht, ihre Infrastruktur besser auszulasten. Außerdem wird die Kundenzufriedenheit erhöht, weil seltener Ladevorgänge wegen einer Überschreitung der Belastung einzelner Phasen der Anschlussleitung abgelehnt werden müssen. Ebenso können die an eine Anschlussleitung angeschlossenen Fahrzeuge schneller geladen werden, weil die Stromaufnahme beim Laden seltener aufgrund einer Überlastung einzelner Phasen gedrosselt werden muss. Außerdem wird eine unzulässige Unsymmetrie der Netzbelastung vermieden bzw. eine Unsymmetrie zumindest reduziert.

Wenn ein Fahrzeug jedoch sämtliche drei Phasen zum Laden seiner Fahrbatterie verwendet und diese drei Phasen gleichmäßig belastet werden, dann tritt keine unsymmetrische Belastung auf und ein Schalten der Schalteinrichtung unterbleibt.

## Patentansprüche

1. Verfahren zum Laden einer Fahrbatterie (3) eines elektrisch antreibbaren Fahrzeugs (5) mittels einer Ladeeinrichtung (1), die über eine mehrphasige Anschlussleitung (22) elektrisch mit einer Energieversorgungseinrichtung (25) verbunden ist und die über ein mehrphasiges Kontaktmittel (11) elektrisch mit dem Fahrzeug (5) verbunden ist, wobei bei dem Verfahren
- die Größe des durch die einzelnen Phasen des Kontaktmittels (11) zu dem Fahrzeug (5) fließenden Stroms ermittelt (13) wird, und
- mittels eines Schaltens einer Schalteinrichtung (17) die Phase (L1') des Kontaktmittels (11), durch die der größte Strom fließt, elektrisch verbunden wird mit derjenigen Phase (L3) der Anschlussleitung (22), die elektrisch am geringsten belastet ist.

2. Verfahren nach Anspruch 1,
**dadurch gekennzeichnet,**
**dass** mittels eines Schaltens der Schalteinrichtung (17) die Phase (L2') des Kontaktmittels (11), durch die der zweitgrößte Strom fließt, elektrisch verbunden wird mit derjenigen Phase (L1) der Anschlussleitung (22), die elektrisch am zweitgeringsten belastet ist.

3. Verfahren nach Anspruch 1 oder 2,
**dadurch gekennzeichnet,**
**dass** mittels eines Schaltens der Schalteinrichtung (17) die Phase (L3') des Kontaktmittels (11), durch die der kleinste Strom fließt, elektrisch verbunden wird mit derjenigen Phase (L2) der Anschlussleitung (22), die elektrisch am stärksten belastet ist.

4. Verfahren nach einem der vorhergehenden Ansprüche,
**dadurch gekennzeichnet,**
**dass** das Schalten der Schalteinrichtung (17) unterbleibt, wenn durch alle Phasen (L1', L2', L3') des Kontaktmittels (11) im wesentlichen gleich große Ströme fließen.

5. Verfahren nach einem der vorhergehenden Ansprüche,
**dadurch gekennzeichnet,**
**dass** die Anschlussleitung (22) und/oder das Kontaktmittel (11) jeweils zweiphasig oder dreiphasig sind.

6. Verfahren nach einem der vorhergehenden Ansprüche,
**dadurch gekennzeichnet,**
**dass** vor dem Schalten der durch das Kontaktmittel (11) zu dem Fahrzeug (5) fließende Strom verringert wird.

7. Verfahren nach Anspruch 6,
**dadurch gekennzeichnet,**
**dass** der Strom verringert wird, indem dem Fahrzeug (5) eine Verringerung des zulässigen Ladestroms signalisiert wird (206).

8. Verfahren nach einem der vorhergehenden Ansprüche,
**dadurch gekennzeichnet,**
**dass** nach dem Schalten der durch das Kontaktmittel (11) zu dem Fahrzeug (5) fließende Strom vergrößert wird.

9. Verfahren nach Anspruch 8,
**dadurch gekennzeichnet,**
**dass** der Strom vergrößert wird, indem dem Fahrzeug (5) eine Vergrößerung des zulässigen Ladestroms signalisiert wird (210).

10. Verfahren nach einem der vorhergehenden Ansprüche,
**dadurch gekennzeichnet,**
**dass** bei der Ermittlung der elektrischen Belastung der Phasen der Anschlussleitung (22) die elektrische Maximalbelastbarkeit der einzelnen Phasen (L1, L2, L3) berücksichtigt wird.

11. Verfahren nach einem der vorhergehenden Ansprüche,
**dadurch gekennzeichnet,**
**dass** dem Fahrzeug (5) eine Verringerung des zulässigen Ladestroms unter den Lade-Nennstrom signalisiert wird, wenn bei Laden des Fahrzeugs (5) mit dem Lade-Nennstrom bei wenigstens einer Phase (L1, L2, L3) der Anschlussleitung (22) deren elektrische Maximalbelastbarkeit überschritten werden würde.

12. Anordnung zum Laden einer Fahrbatterie (3) eines elektrisch antreibbaren Fahrzeugs (5), mit
- mindestens einer Ladeeinrichtung (1), die über eine mehrphasige Anschlussleitung (22) mit einer Energieversorgungseinrichtung (25) verbindbar ist und die über ein mehrphasiges Kontaktmittel (11) mit dem Fahrzeug (5) verbindbar ist,
- wobei die Ladeeinrichtung (1) eine Schalteinrichtung /17) aufweist, die eingerichtet ist, eine elektrische Verbindung zwischen den elektrischen Phasen des Kontaktmittels (11) und den elektrischen Phasen der Anschlussleitung (22) herzustellen.

13. Anordnung nach Anspruch 12,
**gekennzeichnet durch**
eine Steuereinheit (37), die ein Steuersignal (60) erzeugt, wobei das Steuersignal (60) angibt, zwischen welchen Phasen des Kontaktmittels (11) und welchen Phasen der Anschlussleitung (22) die Schalteinrichtung (17) die elektrische Verbindung herzustellen hat.

14. Anordnung nach einem der Ansprüche 12 bis 13,
**dadurch gekennzeichnet,**
**dass** die Anschlussleitung (22) und/oder das Kontaktmittel (11) jeweils zweiphasig oder dreiphasig sind.
